# DEMANDE DE BREVET EUROPEEN

(11) **EP 4 537 721 A1**
(43) Date de publication de la demande: **16.04.2025**
(21) Numéro de dépôt: 24204598.7
(22) Date de dépôt: 04.10.2024
(51) Int. Cl.: A47J 37/06

(54) **APPAREIL DE CUISSON ÉLECTRIQUE COMPORTANT UN ACCESSOIRE DE CUISSON**

(30) Priorité: 09.10.2023 FR 2310771
(71) Demandeur: SEB S.A., 69130 Ecully (FR)
(72) Inventeur: PERERA, Philippe, 69134 ECULLY cedex (FR)
(74) Mandataire: Germain Maureau

(57) **Abrégé**

L'invention concerne un appareil de cuisson électrique (1) configuré pour cuire des aliments, et comprenant un boîtier inférieur (2), une plaque de cuisson (5) supportée par le boîtier inférieur (2), un récipient de cuisson (6) comprenant un fond de récipient (21) et configuré pour occuper une configuration d'utilisation dans laquelle le récipient de cuisson (6) repose sur la plaque de cuisson (5). L'appareil de cuisson électrique (1) comporte un dispositif de positionnement (24) configuré pour positionner sensiblement horizontalement le fond de récipient (21) lorsque le récipient de cuisson (6) occupe la configuration d'utilisation et que le boîtier inférieur (2) repose sur un support de réception qui est horizontal.

## Description

### Domaine technique

La présente invention concerne de manière générale un appareil de cuisson électrique, pour la cuisson de produits alimentaires.

L'invention trouve en particulier une application dans les appareils de cuisson électrique de type grill utilisant au moins un mode de cuisson à air chaud.

### Etat de la technique

Il est connu de l'art antérieur d'utiliser un appareil de cuisson électrique configuré pour cuire des aliments, et comprenant :
- un boîtier inférieur configuré pour reposer sur un support de réception,
- une plaque de cuisson supportée par le boîtier inférieur et comportant un fond de plaque qui est configuré pour être incliné par rapport à l'horizontal lorsque le boîtier inférieur repose sur un support de réception qui est horizontal,
- un récipient de cuisson comportant un fond de récipient et des parois périphériques délimitant un volume interne, le récipient de cuisson étant configuré pour occuper une configuration d'utilisation dans laquelle le récipient de cuisson repose sur la plaque de cuisson,
- un couvercle configuré pour occuper une position de fermeture dans laquelle le couvercle surmonte le volume interne, et une position d'ouverture dans laquelle le couvercle autorise un accès au volume interne, et
- un élément chauffant configuré pour chauffer et cuire les aliments présents dans le volume interne.

Un tel dispositif permet à un utilisateur de réaliser la cuisson de produits alimentaires à l'intérieur du récipient de cuisson, le récipient de cuisson étant dans la configuration d'utilisation en reposant sur la plaque de cuisson.

Ce type de dispositif est particulièrement performant car il permet à l'utilisateur de réaliser une cuisson de produits alimentaires à l'intérieur du récipient de cuisson sans avoir besoin de retirer la plaque de cuisson. Cependant, un tel dispositif présente des inconvénients majeurs, le premier étant l'inclinaison du récipient de cuisson qui est consécutif à l'utilisation de la plaque de cuisson comme support, ce qui conduit à accumuler les sauces ou liquides de la recette vers l'avant du récipient de cuisson. Un autre inconvénient réside dans la mise en place hasardeuse du récipient de cuisson sur la plaque de cuisson, le récipient de cuisson pouvant se déplacer sur le fond de plaque et ainsi empêcher la bonne fermeture du couvercle lors de la cuisson.

### Résumé de l'invention

La présente invention vise à remédier partiellement ou en totalité aux inconvénients précités.

Le problème technique à la base de l'invention consiste donc à fournir un appareil de cuisson électrique conformé pour assurer une cuisson homogène de produits alimentaires présents à l'intérieur d'un récipient de cuisson, qui soit de structure simple, compacte et économique.

A cet effet, la présente invention concerne un appareil de cuisson électrique configuré pour cuire des aliments, et comprenant :
- un boîtier inférieur,
- une plaque de cuisson supportée par le boîtier inférieur, la plaque de cuisson comportant un fond de plaque et des rebords périphériques s'étendant à partir du fond de plaque et délimitant avec le fond de plaque un premier volume interne, le fond de plaque étant configuré pour être incliné par rapport à l'horizontal lorsque le boîtier inférieur repose sur un support de réception qui est horizontal,
- un récipient de cuisson comprenant un fond de récipient et des parois périphériques s'étendant à partir du fonde de récipient et délimitant un deuxième volume interne, le récipient de cuisson étant configuré pour occuper une configuration d'utilisation dans laquelle le récipient de cuisson repose sur la plaque de cuisson,
- un couvercle configuré pour occuper une position de fermeture dans laquelle le boîtier inférieur et le couvercle délimitent un volume de cuisson et empêchent l'accès au récipient de cuisson lorsque le récipient de cuisson occupe la configuration d'utilisation, et une position d'ouverture dans laquelle le couvercle est configuré pour autoriser un accès au récipient de cuisson lorsque le récipient de cuisson occupe la configuration d'utilisation,
- un système de chauffage configuré pour chauffer et cuire des aliments reçus dans le volume de cuisson, et par exemple reçus sur la plaque de cuisson ou dans le récipient de cuisson,
l'appareil de cuisson électrique comporte un dispositif de positionnement configuré pour positionner sensiblement horizontalement le fond de récipient lorsque le récipient de cuisson occupe la configuration d'utilisation et que le boîtier inférieur repose sur un support de réception qui est horizontal.

Une telle configuration de l'appareil de cuisson électrique permet de réaliser une cuisson homogène des aliments présents à l'intérieur du récipient de cuisson. En effet, la position horizontale du fond de plaque du récipient de cuisson permet d'éviter que les aliments ne soient amalgamés sur un coté du récipient de cuisson.

L'appareil de cuisson électrique peut en outre présenter une ou plusieurs des caractéristiques suivantes, qui peuvent être prises seules ou en combinaison.

Selon un mode de réalisation de l'invention, le boîtier inférieur comporte un logement de réception, et la plaque de cuisson est configurée pour être logée au moins en partie dans le logement de réception.

Selon un mode de réalisation de l'invention, le volume de cuisson est un volume fermé.

Selon un mode de réalisation de l'invention, le couvercle configuré pour surmonter la plaque de cuisson et le récipient de cuisson lorsque le couvercle est dans la position de fermeture et que le récipient de cuisson occupe la configuration d'utilisation.

Selon un mode de réalisation de l'invention, le système de chauffage comporte un dispositif de chauffage inférieur, tel qu'une résistance électrique chauffante par exemple, disposé sous la plaque de cuisson et un dispositif de chauffage à air chaud disposé dans le couvercle.

Selon un mode de réalisation de l'invention, le dispositif de chauffage à air chaud comprend un dispositif de circulation d'air configuré pour générer un flux d'air sur les aliments reçus dans le volume de cuisson, et par exemple reçus sur la plaque de cuisson ou dans le récipient de cuisson, lorsque le couvercle occupe la position de fermeture.

Selon un mode de réalisation de l'invention, le dispositif de chauffage à air chaud comporte un organe de chauffage, tel qu'une résistance électrique chauffante par exemple, configuré pour chauffer le flux d'air généré par le dispositif de circulation d'air.

Selon un mode de réalisation de l'invention, le dispositif de circulation d'air comporte un ventilateur par exemple.

Selon un mode de réalisation de l'invention, le dispositif de chauffage à air chaud comprend un dispositif d'entrainement configuré pour entrainer en rotation le dispositif de circulation d'air.

Selon un mode de réalisation de l'invention, le dispositif d'entrainement comporte un moteur électrique par exemple.

Selon un mode de réalisation de l'invention, le dispositif de circulation d'air et le dispositif d'entrainement sont prévus dans le couvercle.

Selon un mode de réalisation de l'invention, le dispositif de circulation d'air est configuré pour s'étendre sensiblement en vis-à-vis du récipient de cuisson lorsque le couvercle occupe la position de fermeture et que le récipient de cuisson est dans la configuration d'utilisation.

Selon un mode de réalisation de l'invention, le dispositif de chauffage inférieur est prévu dans le boîtier inférieur.

Selon un mode de réalisation de l'invention, le fond de récipient présente une forme sensiblement rectangulaire.

Selon un mode de réalisation de l'invention, le dispositif de positionnement comporte au moins un organe de positionnement, tel qu'une nervure de positionnement, prévu sur la plaque de cuisson et faisant saillie du fond de plaque, l'au moins un organe de positionnement étant configuré pour surélever au moins une partie du récipient de cuisson par rapport au fond de plaque lorsque le récipient de cuisson occupe la configuration d'utilisation.

Selon un mode de réalisation de l'invention, l'au moins un organe de positionnement présente une forme en arc de cercle.

Selon un mode de réalisation de l'invention, le récipient de cuisson présente une forme globalement rectangulaire, et le dispositif de positionnement comporte quatre organes de positionnement prévus sur la plaque de cuisson et faisant saillie du fond de plaque, chaque organe de positionnement étant configuré pour s'étendre en regard d'une partie de coin respective du fond de récipient.

Selon un mode de réalisation de l'invention, le récipient de cuisson est configuré pour reposer, et par exemple pour reposer uniquement, sur les organes de positionnement lorsque le récipient de cuisson occupe la configuration d'utilisation.

Selon un mode de réalisation de l'invention, les organes de positionnement sont configurés pour indexer le récipient de cuisson dans une position prédéterminée lorsque le récipient de cuisson occupe la configuration d'utilisation.

Selon un mode de réalisation de l'invention, le dispositif de positionnement comporte au moins un élément de positionnement prévu sur le récipient de cuisson, l'au moins un organe de positionnement étant configuré pour être logé dans l'au moins un élément de positionnement lorsque le récipient de cuisson est dans la configuration d'utilisation.

Selon un mode de réalisation de l'invention, l'au moins un élément de positionnement est une rainure périphérique prévue sur une face inférieure du fond de récipient et s'étendant sur le pourtour dudit fond de récipient.

Selon un mode de réalisation de l'invention, la plaque de cuisson comporte quatre organes de positionnement prévus pour s'étendre du coté de chacun des angles du récipient de cuisson. Une telle configuration de l'invention permet l'indexage, et donc un positionnement facilité, de la plaque de cuisson du récipient de cuisson dans la configuration d'utilisation. En effet, la forme spécifique de l'organe de positionnement et de l'élément de positionnement permet avantageusement une mise en position « centrée » du récipient de cuisson sur la plaque de cuisson. Ainsi, la fermeture du couvercle de l'appareil de cuisson électrique n'est pas bloquée par un mauvais positionnement du récipient de cuisson dans la configuration d'utilisation.

Selon un mode de réalisation de l'invention, la plaque de cuisson comporte une première paire d'organes de positionnement qui sont situés dans une partie avant de la plaque de cuisson et qui présentent une première hauteur, et une deuxième paire d'organes de positionnement qui sont situés dans une partie arrière de la plaque de cuisson et qui présente une deuxième hauteur qui est inférieure à la première hauteur.

Selon un mode de réalisation de l'invention, les organes de positionnement appartenant au première et deuxième paires présentent chacun une surface d'appui, et les première et deuxième hauteurs sont définies de telle sorte que les surfaces d'appui définissent un plan de support qui est sensiblement horizontal lorsque le récipient de cuisson est dans la configuration d'utilisation.

Selon un mode de réalisation de l'invention, la face inférieure du fond de récipient est sensiblement plane.

Selon un mode de réalisation de l'invention, l'appareil de cuisson électrique comporte un bac de collecte configuré pour collecter des jus de cuisson provenant de la plaque de cuisson, et dans lequel la plaque de cuisson comporte en outre un orifice d'évacuation débouchant dans le premier volume interne et configuré pour être situé verticalement à l'aplomb du bac de collecte. De façon avantageuse, l'orifice d'évacuation est configuré pour permettre un écoulement par gravité des jus de cuisson, contenus dans le premier volume interne, dans le bac de collecte.

Selon un mode de réalisation de l'invention, le bac de collecte est disposé dans une partie avant du boîtier inférieur.

Selon un mode de réalisation de l'invention, le bac de collecte est configuré pour être situé au moins en dessous de la plaque de cuisson.

Selon un mode de réalisation de l'invention, le fond de plaque comporte au moins une surface de guidage inclinée qui est configurée pour guider et orienter des jus de cuisson contenus dans le premier volume interne en direction de l'orifice d'évacuation.

Selon un mode de réalisation de l'invention, l'au moins une surface de guidage inclinée est configurée pour être inclinée par rapport à l'horizontal lorsque le boîtier inférieur repose sur une surface horizontale.

Selon un mode de réalisation de l'invention, l'orifice d'évacuation est prévu sur le fond de plaque.

Selon un mode de réalisation de l'invention, la plaque de cuisson comporte des nervures de support prévues sur le fond de plaque et configurées pour supporter des aliments disposés sur la plaque de cuisson.

Selon un mode de réalisation de l'invention, chaque nervure de support présente une hauteur qui augmente en direction d'un bord avant de la plaque de cuisson.

Selon un mode de réalisation de l'invention, les nervures de supports comportent chacune une surface de contact qui est configurée pour s'étendre sensiblement horizontalement lorsque le boîtier inférieur repose sur une surface horizontale.

Selon un mode de réalisation de l'invention, l'au moins un organe de positionnement fait saillie par rapport aux faces supérieures des nervures de support.

Selon un mode de réalisation de l'invention, l'au moins un organe de positionnement présente une hauteur identique ou supérieure à celle des nervures de support.

Selon un mode de réalisation de l'invention, les nervures de support délimitent des canaux d'écoulement de jus de cuisson configurés pour guider et orienter au moins une partie des jus de cuisson contenus dans le premier volume interne en direction de l'orifice d'évacuation. Selon un mode de réalisation de l'invention, la plaque de cuisson comporte en outre un canal de collecte configuré pour collecter des jus de cuisson s'écoulant dans les canaux d'écoulement de jus de cuisson et pour guider et orienter lesdits jus de cuisson en direction de l'orifice d'évacuation. De façon avantageuse, le canal de collecte comporte un fond de récipient qui est inclinée et qui est configurée pour guider et orienter les jus de cuisson contenus dans le canal de collecte en direction de l'orifice d'évacuation. Le canal de collecte peut par exemple s'étendre le long d'un bord avant de la plaque de cuisson.

Selon un mode de réalisation de l'invention, le récipient de cuisson comporte en outre un orifice d'écoulement configuré pour s'étendre verticalement à l'aplomb de la plaque de cuisson lorsque le récipient de cuisson est dans la configuration d'utilisation. Une telle configuration de l'invention permet avantageusement de conduire les jus de cuisson depuis le récipient de cuisson jusqu'à la plaque de cuisson au travers de l'orifice d'écoulement, puis de la plaque de cuisson jusqu'au bac de collecte au travers de l'orifice d'évacuation.

Selon un mode de réalisation de l'invention, le plaque de cuisson est amovible par rapport au boîtier inférieur.

Selon un mode de réalisation de l'invention, le récipient de cuisson est amovible.

A défaut de stipulation contraire, le terme « sensiblement » signifie, dans le présent document, « exactement ou à 10% ou à 10° près ».

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue en coupe d'un appareil de cuisson électrique selon la présente invention ;
[Fig 2] est une vue en coupe d'un récipient de cuisson et d'une plaque de cuisson appartenant à l'appareil de cuisson électrique de la figure 1 ;
[Fig 3] est une vue en perspective du dessus du récipient de cuisson et de la plaque de la cuisson de la figure 2 ;
[Fig 4] est une vue en perspective du dessus de la plaque de la cuisson de la figure 2 ;
[Fig 5] est une vue en perspective du dessous de la plaque de la cuisson de la figure 2 ;
[Fig 6] est une vue en perspective du dessus du récipient de cuisson de la figure 2 ;
[Fig 7] est une vue en perspective du dessous du récipient de cuisson de la figure 2 ;
[Fig 8] est une vue en perspective de dessus de l'appareil de cuisson de la figure 1.

### Description détaillée

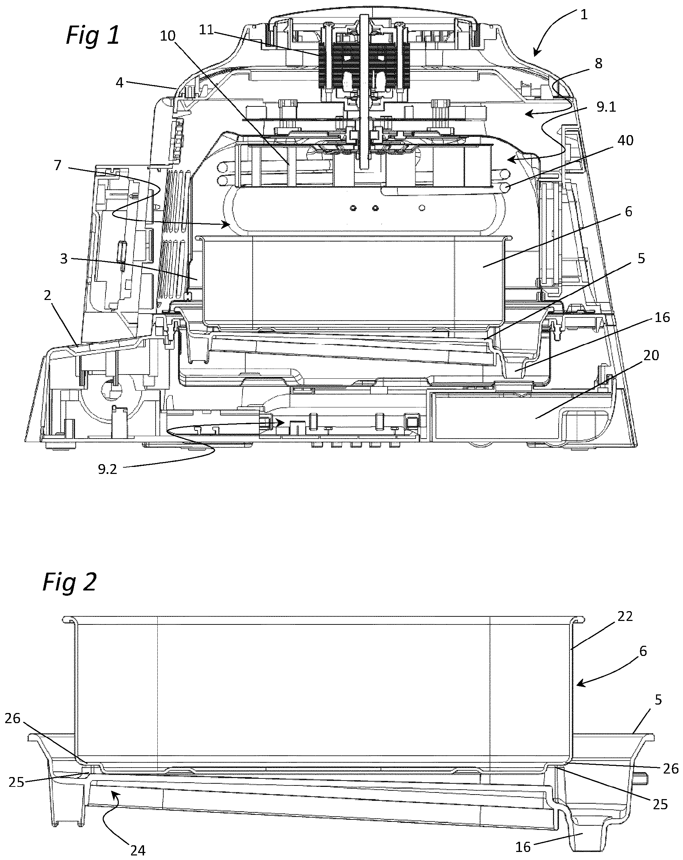

Les figures 1 à 8 représentent un appareil de cuisson électrique 1 configuré pour cuire des aliments. L'appareil de cuisson électrique 1 comprend notamment un boîtier inférieur 2 délimitant un logement de réception 3, un couvercle 4 relié mécaniquement au boîtier inférieur 2, une plaque de cuisson 5 configurée pour reposer sur le boîtier inférieur 2 et pour être logée au moins en partie dans le logement de réception 3 et un récipient de cuisson 6 configuré pour occuper une configuration d'utilisation dans laquelle le récipient de cuisson 6 repose sur la plaque de cuisson 5.

Le couvercle 4 est plus particulièrement monté pivotant par rapport au boîtier inférieur 2 autour d'un axe de pivotement A1 et entre une position de fermeture et une position d'ouverture. De façon avantageuse, l'axe de pivotement A1 est sensiblement horizontal lorsque le boîtier inférieur 2 repose sur une surface horizontale.

Comme montré sur la figure 1, lorsque le couvercle 4 occupe la position de fermeture, le boîtier inférieur 2 et le couvercle 4 délimitent un volume de cuisson 7 apte à recevoir le récipient de cuisson 6 lorsque ce dernier occupe la configuration d'utilisation, et le couvercle 4 est configuré pour surmonter la plaque de cuisson 5 et le récipient de cuisson 6 et pour empêcher un accès au récipient de cuisson 6 lorsque le récipient de cuisson 6 occupe la configuration d'utilisation.

Dans la position d'ouverture, le couvercle 4 est configuré pour autoriser un accès au récipient de cuisson 6 lorsque le récipient de cuisson 6 occupe la configuration d'utilisation, ou pour permettre un accès à la plaque de cuisson 5 lorsque le récipient de cuisson 6 n'est pas utilisé.

L'appareil de cuisson électrique 1 comprend en outre un système de chauffage 8 configuré pour chauffer et cuire des aliments présents dans le volume de cuisson 7. Plus spécifiquement, le système de chauffage 8 est configuré pour chauffer et cuire les aliments reçus sur la plaque de cuisson 5 ou dans le récipient de cuisson 6.

Selon le mode de réalisation représenté sur les figures, le système de chauffage 8 comporte un dispositif de chauffage à air chaud 9.1 (voir figure 1) qui est configuré pour cuire des aliments reçus sur la plaque de cuisson 5 ou dans le récipient de cuisson 6 selon au moins un mode de cuisson à air chaud.

Le dispositif de chauffage à air chaud 9.1 comprend un dispositif de circulation d'air 10, tel qu'un ventilateur ou une pale par exemple, configuré pour générer un flux d'air sur les aliments reçus sur la plaque de cuisson 5 ou dans le récipient de cuisson 6 lorsque le couvercle 4 occupe la position de fermeture. Le dispositif de chauffage à air chaud 9.1 comprend en outre un dispositif d'entrainement 11, tel qu'un moteur par exemple, configuré pour entrainer en rotation le dispositif de circulation d'air 10. Le dispositif de chauffage à air chaud 9.1 comporte un organe de chauffage 40, tel qu'une résistance électrique chauffante par exemple, configuré pour chauffer le flux d'air généré par le dispositif de circulation d'air 10.

Afin de simplifier l'intégration matérielle et limiter l'encombrement, le dispositif de circulation d'air 10 et le dispositif d'entrainement 11 sont prévus dans le couvercle 4. Avantageusement encore, lorsque le couvercle 4 occupe la position de fermeture, le dispositif de circulation d'air 10 est configuré pour s'étendre en vis-à-vis de la plaque de cuisson 5, ou du récipient de cuisson 6 lorsque ce dernier est dans la configuration d'utilisation, de telle sorte que le flux d'air chaud, généré par le dispositif de chauffage à air chaud 9.1, est efficacement dirigé sur les aliments présents dans le volume de cuisson 7 lors de l'utilisation de l'appareil de cuisson électrique 1 selon le mode de cuisson à air chaud. De façon alternative ou complémentaire, le système de chauffage 8 peut comporter un dispositif de chauffage inférieur 9.2, tel qu'une résistance électrique chauffante par exemple, prévu dans le boîtier inférieur 2 et configuré pour chauffer la plaque de cuisson 5.

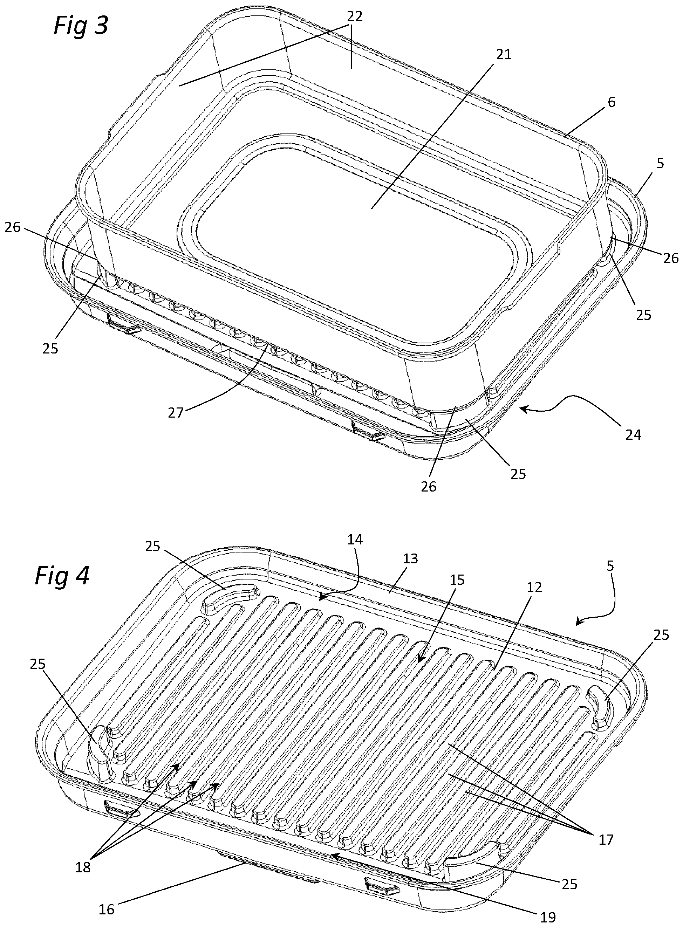

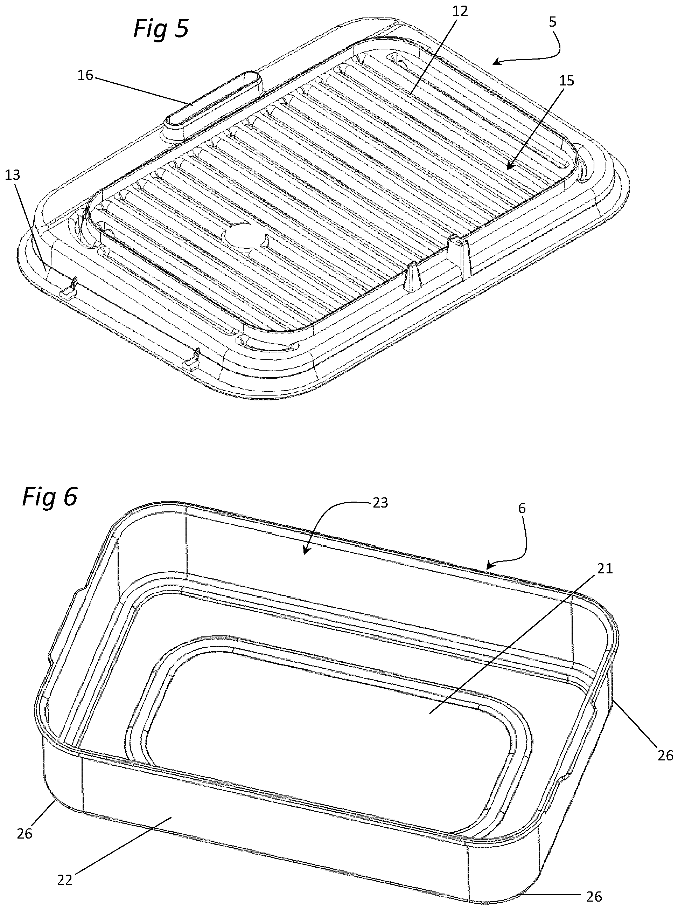

Les figures 4 et 5 exposent de façon plus précise la configuration spécifique de la plaque de cuisson 5. La plaque de cuisson 5 comporte un fond de plaque 12 et des rebords périphériques 13 délimitant, avec le fond de plaque 12, un premier volume interne 14. Le fond de plaque 12 est configurée pour être inclinée par rapport à l'horizontal lorsque le boîtier inférieur 2 repose sur un support de réception qui est horizontal.

De façon avantageuse, le fond de plaque 12 comporte une surface de guidage inclinée 15 qui est configurée pour guider et orienter des jus de cuisson contenus dans le premier volume interne 14 en direction d'un orifice d'évacuation 16 prévu sur le fond de plaque 12. La surface de guidage inclinée 15 est configurée pour être inclinée par rapport à l'horizontal lorsque le boîtier inférieur 2 repose sur une surface horizontale.

Selon le mode de réalisation représenté sur les figures, la plaque de cuisson 5 comporte des nervures de support 17 prévues sur le fond de plaque 12 et configurées pour supporter des aliments disposés sur la plaque de cuisson 5. Chaque nervure de support 17 présente une hauteur qui augmente en direction d'un bord avant de la plaque de cuisson 5. De façon avantageuse, les nervures de support 17 comportent chacune une surface de contact qui est configurée pour s'étendre sensiblement horizontalement lorsque le boîtier inférieur 2 repose sur une surface horizontale.

Les nervures de support 17 délimitent plus particulièrement des canaux d'écoulement de jus de cuisson 18 configurés pour guider et orienter des jus de cuisson contenus dans le premier volume interne 14 en direction de l'orifice d'évacuation 16 durant la cuisson. La plaque de cuisson 5 comporte en outre un canal de collecte 19 configuré pour collecter les jus de cuisson s'écoulant dans les canaux d'écoulement de jus de cuisson 18 et pour guider et orienter lesdits jus de cuisson en direction de l'orifice d'évacuation 16. De façon avantageuse, le canal de collecte 19 comporte une portion de fond qui est inclinée et qui est configurée pour guider et orienter les jus de cuisson contenus dans le canal de collecte 19 en direction de l'orifice d'évacuation 16. Le canal de collecte 19 peut par exemple s'étendre le long d'un bord avant de la plaque de cuisson 5.

De façon avantageuse, l'appareil de cuisson électrique 1 comporte un bac de collecte 20 configuré pour collecter les jus de cuisson provenant de la plaque de cuisson 5 et s'écoulant au travers de l'orifice d'évacuation 16. Le bac de collecte 20 est configuré pour être situé verticalement à l'aplomb de l'orifice d'évacuation 16. De façon avantageuse, l'orifice d'évacuation 16 est configuré pour permettre un écoulement par gravité des jus de cuisson, contenus dans le premier volume interne 14, dans le bac de collecte 20. Le bac de collecte 20 est disposé dans une partie avant du boîtier inférieur 2 et est configuré pour être situé au moins en dessous de la plaque de cuisson 5.

Le récipient de cuisson 6, configuré pour coopérer avec la plaque de cuisson 5 dans la configuration d'utilisation, est représenté sur les figures 6, 7 et 8. Le récipient de cuisson 6 présente une forme globalement rectangulaire et comprend un fond de récipient 21 et des parois périphériques 22 délimitant un deuxième volume interne 23. Le fond de récipient présente une forme sensiblement rectangulaire et est sensiblement plane. Selon une variante du mode de réalisation de l'invention non représentée sur les figures, le récipient de cuisson 6 peut en outre comporter un orifice d'écoulement configuré pour s'étendre verticalement à l'aplomb de la plaque de cuisson 5 lorsque le récipient de cuisson 6 est dans la configuration d'utilisation. Une telle configuration de l'invention permet avantageusement de conduire les jus de cuisson depuis le récipient de cuisson 6 jusqu'à la plaque de cuisson 5 au travers de l'orifice d'écoulement, puis de la plaque de cuisson 5 jusqu'au bac de collecte 20 au travers de l'orifice d'évacuation 16.

L'appareil de cuisson électrique 1 comporte en outre un dispositif de positionnement 24 configuré pour positionner sensiblement horizontalement le fond de récipient 21 du récipient de cuisson 6 lorsque le récipient de cuisson 6 occupe la configuration d'utilisation et que le boîtier inférieur 2 repose sur un support de réception qui est horizontal. Une telle configuration de l'appareil de cuisson électrique 1 selon le mode de réalisation de l'invention permet de réaliser une cuisson homogène des aliments présents à l'intérieur du récipient de cuisson 6. En effet, la position horizontale du fond de récipient 12 du récipient de cuisson 6 permet d'éviter que les aliments ne soient amalgamés sur un coté du récipient de cuisson 6.

Selon le mode de réalisation de l'invention représenté sur les figures, le dispositif de positionnement 24 comporte quatre organes de positionnement 25, tel que des nervures de positionnement, prévus sur la plaque de cuisson 5 et faisant saillie du fond de plaque 12. Les organes de positionnement 25 sont configurés pour surélever une partie du récipient de cuisson 6 par rapport au fond de plaque 12 lorsque le récipient de cuisson 6 occupe la configuration d'utilisation. Chaque organe de positionnement 25 présente une forme en arc de cercle et est configuré pour s'étendre en regard d'une partie de coin 26 respective du fond de récipient 21, ce qui permet avantageusement d'indexer le récipient de cuisson 6 dans une position prédéterminée lorsque le récipient de cuisson 6 occupe la configuration d'utilisation. L'indexage permet, de façon avantageuse, un centrage du récipient de cuisson 6 sur la plaque de cuisson 5. Ainsi, la fermeture du couvercle 4 de l'appareil de cuisson électrique 1 n'est pas bloquée par un mauvais positionnement du récipient de cuisson 6 dans la configuration d'utilisation.

De façon avantageuse, le récipient de cuisson 6 est configuré pour reposer uniquement sur les organes de positionnement 25 lorsque le récipient de cuisson 6 occupe la configuration d'utilisation. De façon avantageuse, la plaque de cuisson 5 comporte une première paire d'organes de positionnement 25 qui sont situés dans une partie avant de la plaque de cuisson 5 et qui présentent une première hauteur, et une deuxième paire d'organes de positionnement 25 qui sont situés dans une partie arrière de la plaque de cuisson 5 et qui présente une deuxième hauteur qui est inférieure à la première hauteur. Les organes de positionnement 25 appartenant au première et deuxième paires présentent chacun une surface d'appui qui est sensiblement plane, et les première et deuxième hauteurs sont définies de telle sorte que les surfaces d'appui définissent un plan de support qui est sensiblement horizontal lorsque le récipient de cuisson 6 est dans la configuration d'utilisation et que le boîtier inférieur 2 repose sur une surface horizontale.

Par ailleurs, chaque organe de positionnement 25 fait saillie par rapport aux faces supérieures des nervures de support 17.

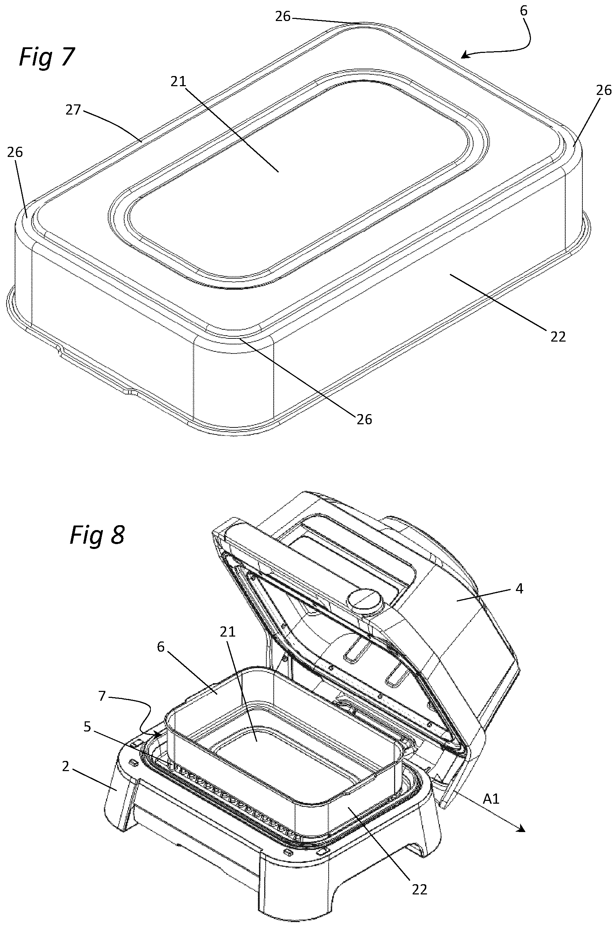

Le dispositif de positionnement 24 comporte en outre un élément de positionnement 27 prévu sur le récipient de cuisson 6. Chaque organe de positionnement 25 est configuré pour être logé dans l'élément de positionnement 27 lorsque le récipient de cuisson 6 est dans la configuration d'utilisation. Comme visible plus spécifiquement sur la figure 7, l'élément de positionnement 27 est une rainure périphérique prévue sur une face inférieure du fond de récipient 21 et s'étendant sur le pourtour dudit fond de récipient 21.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) configuré pour cuire des aliments, et comprenant :
- un boîtier inférieur (2),
- une plaque de cuisson (5) supportée par le boîtier inférieur (2), la plaque de cuisson (5) comportant un fond de plaque (12) et des rebords périphériques (13) s'étendant à partir fond de plaque (12) et délimitant avec le fond de plaque (12) un premier volume interne (14), le fond de plaque (12) étant configuré pour être incliné par rapport à l'horizontal lorsque le boîtier inférieur (2) repose sur un support de réception qui est horizontal,
- un récipient de cuisson (6) comprenant un fond de récipient (21) et des parois périphériques (22) s'étendant à partir du fond de récipient (21) et délimitant un deuxième volume interne (23), le récipient de cuisson (6) étant configuré pour occuper une configuration d'utilisation dans laquelle le récipient de cuisson (6) repose sur la plaque de cuisson (5),
- un couvercle (4) configuré pour occuper une position de fermeture dans laquelle le boîtier inférieur (2) et le couvercle (4) délimitent un volume de cuisson (7) et empêchent l'accès au récipient de cuisson (6) lorsque le récipient de cuisson (6) occupe la configuration d'utilisation, et une position d'ouverture dans laquelle le couvercle (4) est configuré pour autoriser un accès au récipient de cuisson (6) lorsque le récipient de cuisson (6) occupe la configuration d'utilisation,
- un système de chauffage (8) configuré pour chauffer et cuire des aliments reçus dans le volume de cuisson (7),
**caractérisé en ce que** l'appareil de cuisson électrique (1) comporte un dispositif de positionnement (24) configuré pour positionner sensiblement horizontalement le fond de récipient (21) lorsque le récipient de cuisson (6) occupe la configuration d'utilisation et que le boîtier inférieur (2) repose sur un support de réception qui est horizontal.

2. Appareil de cuisson électrique (1) selon la revendication 1, dans lequel le système de chauffage (8) comporte un dispositif de chauffage inférieur (9.2) disposé sous la plaque de cuisson (5) et un dispositif de chauffage à air chaud (9.1) disposé dans le couvercle (4).

3. Appareil de cuisson électrique (1) selon la revendication 1 ou la revendication 2, dans lequel le dispositif de positionnement (24) comporte au moins un organe de positionnement (25) prévu sur la plaque de cuisson (5) et faisant saillie du fond de plaque (12), l'au moins un organe de positionnement (25) étant configuré pour surélever au moins une partie du récipient de cuisson (6) par rapport au fond de plaque (12) lorsque le récipient de cuisson (6) occupe la configuration d'utilisation.

4. Appareil de cuisson électrique (1) selon la revendication 3, dans lequel l'au moins un organe de positionnement (25) présente une forme en arc de cercle.

5. Appareil de cuisson électrique (1) selon la revendication 3 ou 4, dans lequel le récipient de cuisson (6) présente une forme globalement rectangulaire, et le dispositif de positionnement (24) comporte quatre organes de positionnement (25) prévus sur la plaque de cuisson (5) et faisant saillie du fond de plaque (12), chaque organe de positionnement (25) étant configuré pour s'étendre en regard d'une partie de coin (26) respective du fond de récipient (21).

6. Appareil de cuisson électrique (1) selon la revendication 5, dans lequel les organes de positionnement (25) sont configurés pour indexer le récipient de cuisson (6) dans une position prédéterminée lorsque le récipient de cuisson (6) occupe la configuration d'utilisation.

7. Appareil de cuisson électrique (1) selon l'une quelconque des revendications 3 à 6, dans lequel le dispositif de positionnement (24) comporte au moins un élément de positionnement (27) prévu sur le récipient de cuisson (6), l'au moins un organe de positionnement (25) étant configuré pour être logé dans l'au moins un élément de positionnement (27) lorsque le récipient de cuisson (6) est dans la configuration d'utilisation.

8. Appareil de cuisson électrique (1) selon au moins la revendication 7, dans lequel l'au moins un élément de positionnement (27) est une rainure périphérique prévue sur une face inférieure du fond de récipient (21) et s'étendant sur le pourtour dudit fond de récipient (21).

9. Appareil de cuisson électrique (1) selon l'une quelconque des revendications 1 à 8, dans lequel l'appareil de cuisson électrique (1) comporte un bac de collecte (20) configuré pour collecter des jus de cuisson provenant de la plaque de cuisson (5), et dans lequel la plaque de cuisson (5) comporte en outre un orifice d'évacuation (16) débouchant dans le premier volume interne (14) et configuré pour être situé verticalement à l'aplomb du bac de collecte (20).

10. Appareil de cuisson électrique (1) selon la revendication 9, dans lequel le fond de plaque (12) de la plaque de cuisson (5) comporte au moins une surface de guidage inclinée (15) qui est configurée pour guider et orienter des jus de cuisson contenus dans le premier volume interne (14) en direction de l'orifice d'évacuation (16).

11. Appareil de cuisson électrique (1) selon l'une quelconque des revendications 9 ou 10, dans lequel l'orifice d'évacuation (16) est prévu sur le fond de plaque (12) de la plaque de cuisson (5).

12. Appareil de cuisson électrique (1) selon l'une quelconque des revendications 1 à 11, dans lequel la plaque de cuisson (5) comporte des nervures de support (17) prévues sur le fond de plaque (12) et configurées pour supporter des aliments disposés sur la plaque de cuisson (5).

13. Appareil de cuisson électrique (1) selon au moins les revendications 9 et 12, dans lequel les nervures de support (17) délimitent des canaux d'écoulement de jus de cuisson (18) configurés pour guider et orienter au moins une partie des jus de cuisson contenus dans le premier volume interne (14) en direction de l'orifice d'évacuation (16).

14. Appareil de cuisson électrique (1) selon la revendication 12 ou 13 en combinaison avec la revendication 3, dans lequel l'au moins un organe de positionnement (25) présente une hauteur identique ou supérieure à celle des nervures de support (17).

15. Appareil de cuisson électrique (1) selon l'une quelconque des revendications précédentes, dans lequel le récipient de cuisson (6) comporte en outre un orifice d'écoulement configuré pour s'étendre verticalement à l'aplomb de la plaque de cuisson (5) lorsque le récipient de cuisson (6) est dans la configuration d'utilisation.
